# EUROPÄISCHE PATENTSCHRIFT

(11) **EP 2 412 985 B1**
(45) Veröffentlichungstag und Bekanntmachung des Hinweises auf die Patenterteilung: **01.11.2017**
(21) Anmeldenummer: 11005777.5
(22) Anmeldetag: 14.07.2011
(51) Int. Cl.: F15B 13/08, F16K 27/00

(54) **Fluidverteileranordnung**
Fluid distributor assembly
Dispositif de distribution de fluides

(30) Priorität: 31.07.2010 DE 102010032990
(43) Veröffentlichungstag der Anmeldung: 01.02.2012
(73) Patentinhaber: FESTO AG & Co. KG, 73734 Esslingen (DE)
(72) Erfinder: Dettinger, Karl-Heinz, 73061 Ebersbach (DE); Glock, Matthias, 73066 Uhingen (DE); Fano, Reinhard, 72663 Grossbettlingen (DE)
(74) Vertreter: Patentanwälte Magenbauer & Kollegen Partnerschaft mbB

(56) Entgegenhaltungen:
- US-A- 4 934 411

## Beschreibung

Die Erfindung betrifft eine Fluidverteileranordnung, mit mehreren in einer Aufreihungsrichtung aneinanderreihbaren und zur Bildung einer Modulbaugruppe paarweise durch jeweils mindestens eine Schraubverbindung aneinander fixierbaren Verteilermodulen, die jeweils mindestens einen Fluidkanal aufweisen und von denen mindestens ein erstes Verteilermodul eine in der Aufreihungsrichtung orientierte erste Montagefläche zur Anlage an einer zugewandten ersten Montagefläche eines in der Aufreihungsrichtung benachbarten zweiten Verteilermoduls aufweist, wobei zur Ausbildung mindestens einer das erste und zweite Verteilermodul aneinander fixierenden Schraubverbindung das erste Verteilermodul mindestens ein zu seiner ersten Montagefläche ausmündendes Gewindeloch und das zweite Verteilermodul mindestens ein in der Aufreihungsrichtung durchgehendes Verbindungsloch für eine Verbindungschraube aufweist,wobei zur Herstellung der mindestens einen Schraubverbindung des ersten und zweiten Verteilermoduls ein an die erste Montagefläche des ersten Verteilermoduls ansetzbares und daran mittels einer in das mindestens eine Gewindeloch einschraubbaren Befestigungsschraube unabhängig von dem zweiten Verteilermodul fixierbares Adapterelement vorhanden ist, wobei das zweite Verteilermodul an seiner ersten Montagefläche eine Ausnehmung aufweist, in die das Adapterelement im an das zweite Verteilermodul angesetzten Zustand des ersten Verteilermoduls eintaucht, und wobei das mindestens eine Verbindungsloch des zweiten Verteilermoduls derart in die Ausnehmung einmündet, dass es mit einem Gewindeloch des in die Ausnehmung eintauchenden Adapterelementes fluchtet und eine in das Verbindungsloch eingesetzte Verbindungsschraube in das Gewindeloch des Adapterelementes einschraubbar ist.

Eine in der EP 0 621 407 B1 erläuterte Fluidverteileranordnung enthält mehrere aneinander angebaute erste Verteilermodule, die unter Zwischenschaltung eines als Übergangsmodul fungierenden und als Adapterelement bezeichneten zweiten Verteilermoduls an eine Reihe von dritten Verteilermodulen angebaut ist, so dass sich eine Modulbaugruppe ergibt, in der unterschiedliche Typen von Verteilermodulen zusammengefasst sind. Die ersten und dritten Verteilermodule enthalten jeweils mindestens ein zur Fluidsteuerung dienendes Ventil, wobei sie sich in ihrer Dimensionierung voneinander unterscheiden und insbesondere die dritten Verteilermodule für größere Strömungsraten ausgelegt sind als die ersten Verteilermodule. Durch das zwischengeschaltete, als Übergangsmodul fungierende zweite Verteilermodul ist es möglich, die ersten und dritten Verteilermodule trotz ihres unterschiedlichen Typs fluidisch miteinander zu verknüpfen.

Die einzelnen Verteilermodule sind gemäß EP 0 621 407 B1 unter Verwendung von Schrauben mechanisch miteinander verbunden. Details dieser Schraubverbindung offenbart die EP 0 621 407 B1 jedoch nicht. Um den Charakter der Modularität zu unterstreichen, erscheint es jedoch zweckmäßig, die einzelnen Verteilermodule jeweils paarweise miteinander zu verbinden, so dass in der Aufreihungsrichtung jeweils unmittelbar aufeinanderfolgende Verteilermodule miteinander verschraubt sind und die Möglichkeit besteht, stirnseitige Erweiterungen durch den Anbau weiterer Verteilermodule vorzunehmen, ohne die Modulbaugruppe insgesamt zerlegen zu müssen. Allerdings kann es insbesondere bei den kleiner als das zweite Verteilermodul dimensionierten ersten Verteilermodulen problematisch sein, die zu deren interner mechanischer Verkettung verwendeten Schraubverbindungen auch zur Fixierung an dem größeren zweiten Verteilermodul einzusetzen. Insbesondere kann gegen eine Nutzung der standardmäßig an den ersten Montageflächen der ersten Verteilermodule vorhandenen Gewindelöcher sprechen, dass das zweite Verteilermodul in dem den Mündungen der Gewindelöcher gegenüberliegenden Bereich über einen internen Fluidkanal verfügt, der das Hindurchführen einer mit dem benachbarten ersten Verteilermodul zu verschraubenden Verbindungsschraube erschwert oder unmöglich macht.

Aus der US 4 934 411 A ist eine Fluidverteileranordnung der eingangs genannten Art bekannt, bei der zwei Verteilermodule mittels mehrerer bolzenförmiger Adapter aneinander befestigt sind. Jeder Adapter ist in das eine Verteilermodul eingeschraubt, während das andere Verteilermodul auf die Adapter aufgesteckt ist und mittels Schrauben, die in ein Innengewinde der Adapter eingeschraubt sind, mit dem einen Verteilermodul verspannt ist.

Es ist die Aufgabe der vorliegenden Erfindung, Maßnahmen zu treffen, die es erleichtern, unterschiedlich dimensionierte und/oder ausgestaltete Verteilermodule einer Fluidverteileranordnung auf einfache und kostengünstige Weise miteinander zu verbinden.

Die vorgenannte Aufgabe wird dadurch gelöst, dass das mindestens eine, zur Fixierung des Adapterelementes dienende Gewindeloch des ersten Verteilermodules schräg bezüglich dessen erster Montagefläche ausgerichtet ist.

Somit lässt sich eine Schraubverbindung zwischen zwei Verteilermodulen einer Fluidverteileranordnung auch dann realisieren, wenn die einander zugewandten Montageflächen der miteinander zu verbindenden Verteilermodule hinsichtlich den für eine Schraubverbindung ausgelegten Schnittstellen nicht unmittelbar zusammenpassen. Beispielsweise ist das an der ersten Montagefläche eines ersten Verteilermodules angeordnete mindestens eine Gewindeloch so platziert, dass es problemlos zur Schraubverbindung mit einem gleichartigen ersten Verteilermodul nutzbar ist, jedoch eine ungeeignete Lage und/oder Ausrichtung einnimmt, um mit einem in seiner Ausgestaltung von dem ersten Verteilermodul abweichenden zweiten Verteilermodul verschraubt zu werden. In einem solchen Fall kann das besagte mindestens eine Gewindeloch genutzt werden, um mittels einer Befestigungsschraube ein Adapterelement zu fixieren, das seinerseits ein zur Schraubbefestigung des zweiten Verteilermoduls günstiger platziertes Gewindeloch aufweist. Das Gewindeloch des Adapterelementes ist so platziert, dass es im aneinander angesetzten Zustand der beiden Verteilermodule mit einem das zweite Verteilermodul an einer günstigen Stelle durchsetzenden Verbindungsloch fluchtet und es somit eine Schraubverbindung mit einer in das Verbindungsloch einzusetzenden Verbindungsschraube eingehen kann. Damit die sich gegenüberliegenden ersten Montageflächen, gegebenenfalls unter Zwischenschaltung von Dichtungsmitteln, trotz des am ersten Verteilermodul vorstehenden Adapterelementes weiterhin aneinander zu Anlage gebracht werden können, weist das zweite Verteilermodul eine zur Aufnahme des Adapterelementes dienende Ausnehmung auf, wobei das vorgenannte Verbindungsloch so platziert ist, dass es in diese Ausnehmung einmündet. Durch die Verbindungsschraube wird somit keine direkte Verbindung zwischen den beiden Verteilermodulen hergestellt, sondern lediglich eine Verbindung zwischen dem zweiten Verteilermodul und dem Adapterelement, wobei das Adapterelement seinerseits über mindestens eine Befestigungsschraube an dem ersten Verteilermodul fixiert ist. Indem das mindestens eine Gewindeloch des ersten Verteilermodules schräg bezüglich der ersten Montagefläche des ersten Verteilermodules ausgerichtet ist, wird das Ansetzen einer zur Verbindung zweier gleichartiger erster Verteilermodule genutzten Verkettungsschraube von einer Seitenfläche der Modulanordnung her erleichtert.

Vorteilhafte Weiterbildungen der Erfindung gehen aus den Unteransprüchen hervor.

Zweckmäßig ist es, wenn zu der ersten Montagefläche des ersten Verteilermoduls wenigstens zwei und insbesondere genau zwei Gewindelöcher ausmünden, die zur Fixierung ein und desselben Adapterelementes genutzt werden. Diese wenigstens zwei Gewindelöcher sind insbesondere in einer zur Aufreihungsrichtung der Verteilermodule rechtwinkeligen Höhenrichtung mit Abstand zueinander angeordnet. Zur Fixierung am ersten Verteilermodul verfügt das Adapterelement zweckmäßigerweise über mindestens ein Befestigungsloch, das für den Durchgriff einer Befestigungsschraube ausgebildet ist, die in ein an der ersten Montagefläche des ersten Verteilermoduls ausmündendes Gewindeloch einschraubbar ist, um das Adapterelement mit dem ersten Verteilermodul zu verspannen. Die axiale Richtung des mindestens einen Befestigungsloches ist zweckmäßigerweise so gewählt, dass sie im an die erste Montagefläche angesetzten Zustand des Adapterelementes mit der Längsrichtung des zugeordneten Gewindeloches fluchtet. Dementsprechend hat das mindestens eine Befestigungsloch im an das erste Verteilermodul angesetzten Zustand des Adapterelementes auch eine zu der Aufreihungsrichtung geneigte Ausrichtung, wenn das zugeordnete Gewindeloch des ersten Verteilermoduls den oben schon angesprochenen schrägen Verlauf hat.

Das zur Schraubverbindung mit einer Verbindungsschraube nutzbare Gewindeloch des Adapterelementes befindet sich zweckmäßigerweise zwischen zwei mit Abstand zueinander das Adapterelement durchsetzenden und zur Fixierung des Adapterelementes an dem ersten Verteilermodul genutzten Befestigungslöchern. Vorzugsweise ist das Adapterelement mit genau einem Befestigungsloch ausgestattet, das mittig zwischen zwei Befestigungslöchern angeordnet ist. Für das Adapterelement empfiehlt sich eine leisten-, stab- oder plattenförmige Gestaltung. In diesem Fall kann es mit einer Längsseite voraus an die erste Montagefläche des ersten Verteilermoduls angesetzt werden. Die zu seiner Aufnahme dienende Ausnehmung am zweiten Verteilermodul hat in diesem Falle zweckmäßigerweise die Form einer Längsnut.

Die Fluidverteileranordnung enthält zweckmäßigerweise mehrere erste Verteilermodule, die untereinander identisch gestaltet sein können und die jedenfalls zweckmäßigerweise über untereinander identische erste Montageflächen verfügen und darüber hinaus an ihrer jeweils entgegengesetzten Seite eine zweite Montagefläche aufweisen, die es ermöglicht, zwei erste Verteilermodule mit einander zugewandten ersten und zweiten Montageflächen aneinander anzusetzen und miteinander zu verschrauben. Hierbei verfügt jedes erste Verteilermodul über mindestens ein zur besseren Unterscheidung als Verkettungsloch bezeichnetes Durchgangsloch, das einerseits zu der zweiten Montagefläche ausmündet und andererseits von außen her zugänglich ist, so dass mittels einer hindurchführbaren Verbindungsschraube unter Nutzung des mindestens einen Gewindeloches der ersten Montagefläche eine Schraubverbindung zwischen zwei ersten Verteilermodulen gleichen Typs herstellbar ist.

Das mindestens eine Verkettungsloch hat vorzugsweise einen bezüglich der Aufreihungsrichtung schrägen Verlauf, so dass sich die Verkettungsschraube bequem schräg von außen her einführen lässt.

Die Fluidverteileranordnung beinhaltet zweckmäßigerweise auch noch mindestens ein drittes Verteilermodul, das sich in seiner Ausgestaltung von dem mindestens einen ersten Verteilermodul unterscheidet, wie dieses jedoch zweckmäßigerweise von mindestens einem Fluidkanal durchsetzt ist. Da es nicht möglich ist, erste und dritte Verteilermodule direkt aneinander anzubauen, ist das schon erwähnte zweite Verteilermodul als Übergangsmodul konzipiert, das außer der schon erwähnten ersten Montagefläche eine einen diesbezüglich anderen Umriss aufweisende zweite Montagefläche an der entgegengesetzten Seite aufweist, die an das dritte Verteilermodul angepasst ist. Das Übergangsmodul ist zweckmäßigerweise von mindestens einem Fluidkanal durchsetzt, der eine Fluidverbindung zwischen den Fluidkanälen der an ihn angebauten ersten und dritten Verteilermodule herstellt. Das zweite Verteilermodul fungiert also zweckmäßigerweise als Adapter zur Kombination unterschiedlich gestalteter und insbesondere unterschiedlich dimensionierter erster und dritter Verteilermodule innerhalb ein und derselben Fluidverteileranordnung und insbesondere innerhalb ein und derselben Modulbaugruppe.

Ohne weiteres kann die Fluidverteileranordnung mehrere dritte Verteilermodule enthalten, die in der Aufreihungsrichtung aneinander anbaubar sind, wobei auch hier die jeweils unmittelbar benachbarten dritten Verteilermodule zweckmäßigerweise untereinander individuell verschraubt sind.

Alle Schraubverbindungen sind zweckmäßigerweise so ausgelegt, dass sie sich nur auf die jeweils unmittelbar in der Aufreihungsrichtung benachbarten Verteilermodule beziehen und keine Auswirkungen auf die weiteren Verteilermodule haben.

Zweckmäßigerweise ist mindestens eines der Verteilermodule als Ventilmodul ausgebildet, das mit mindestens einem zur Fluidsteuerung dienenden Ventil ausgestattet ist. Zweckmäßig ist es in diesem Zusammenhang, wenn das mindestens eine erste Verteilermodul ein Ventilmodul ist und darüber hinaus, sofern vorhanden, auch das mindestens eine dritte Verteilermodul als Ventilmodul konzipiert ist. Selbst das zweite Verteilermodul könnte ein Ventilmodul sein, weist jedoch zweckmäßigerweise keine Ventilmittel auf und dient insofern lediglich zur Hindurchleitung des Fluides.

Mindestens ein Ventilmodul kann seinerseits derart modular aufgebaut sein, dass es einen Trägerkörper aufweist, der die zur Aneinanderreihung dienenden Montageflächen aufweist und an dem mindestens ein separates Ventil befestigt ist. Hiervon abweichend kann das Ventilmodul aber auch so gestaltet sein, dass ein die mindestens eine Montagefläche aufweisender Grundkörper zugleich als Gehäuse für die funktionellen Mittel des mindestens einen Ventils fungiert.

Die Fluidverteileranordnung ist insbesondere für den Betrieb mit Druckluft ausgelegt, kann jedoch prinzipiell auch mit anderen gasförmigen Medien und/oder mit flüssigen Medien betrieben werden.

Nachfolgend wird die Erfindung anhand der beiliegenden Zeichnung näher erläutert. In dieser zeigen:
- Figur 1: eine perspektivische Darstellung einer in Form einer Modulbaugruppe realisierten Fluidverteileranordnung, die sich aus ersten, zweiten und dritten Verteilermodulen zusammensetzt,
- Figur 2: die Fluidverteileranordnung aus Figur 1 aus einem anderen Blickwinkel,
- Figur 3: eine Stirnansicht der Fluidverteileranordnung mit Blickrichtung gemäß Pfeil III aus Figur 1,
- Figur 4: eine Draufsicht auf die Fluidverteileranordnung unter Weglassung der zu den ersten und dritten Verteilermodulen gehörenden Ventile,
- Figur 5: eine Draufsicht auf die Anordnung aus Figur 4 mit Blickrichtung gemäß Pfeil V, wobei der Übergangsbereich zwischen einem ersten Verteilermodul und einem zweiten Verteilermodul gemäß Schnittlinie Va-Va aus Figur 6 aufgebrochen dargestellt ist,
- Figur 6: einen Längsschnitt durch die Anordnung aus Figur 5 gemäß Schnittlinie VI-VI,
- Figur 7: eine perspektivische Explosionsdarstellung der Anordnung gemäß Figuren 4 bis 6,
- Figur 8: die Anordnung aus Figur 7 aus einem anderen Blickwinkel,
- Figur 9: eine mit Figur 7 vergleichbare Explosionsdarstellung, allerdings im abgenommenen Zustand eines Adapterelementes, und
- Figur 10: die Anordnung aus Figur 9 aus einem anderen Blickwinkel.

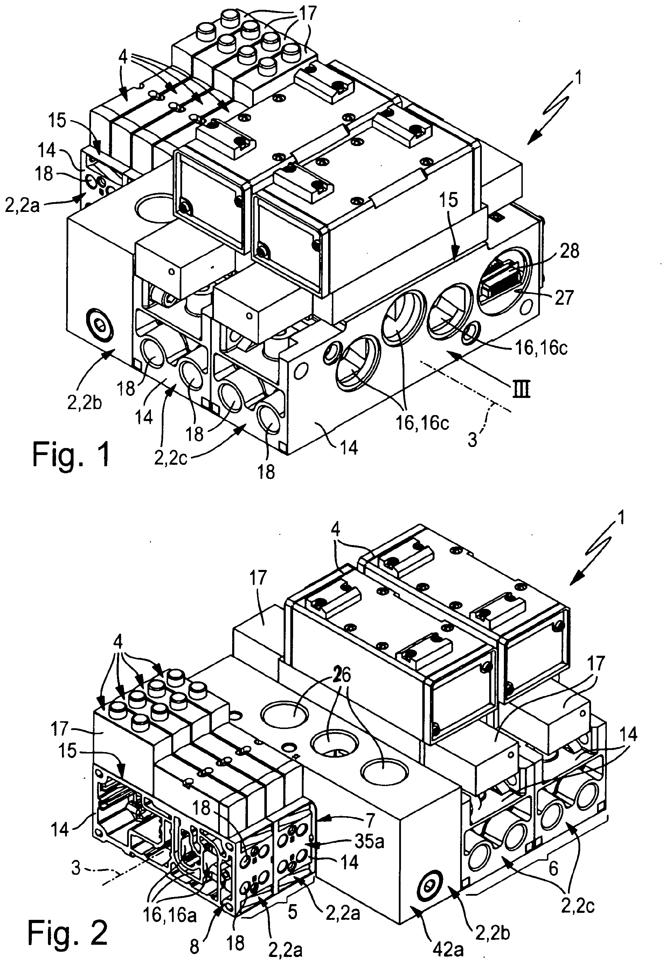

Die Figuren 1 bis 3 zeigen eine besonders vorteilhafte Ausgestaltung einer erfindungsgemäßen Modulbaugruppe 1, in der die erfindungsgemäße Fluidverteileranordnung verkörpert ist. Die besagte Fluidverteileranordnung enthält eine Mehrzahl von Verteilermodulen 2, die - insbesondere in lösbarer Weise - zur Bildung der Modulbaugruppe 1 in einer durch eine strichpunktierte Linie angedeuteten Aufreihungsrichtung 3 aneinanderreihbar und durch noch zu erläuternde Schraubverbindungen aneinander fixierbar sind. Die so entstehende Modulbaugruppe 1 ist selbsttragend und erhält ihre strukturelle Steifigkeit durch die Verbindung zwischen den einzelnen Verteilermodulen 2.

Die Verteilermodule 2 können ihrerseits modular aufgebaut sein. Beim Ausführungsbeispiel trifft dies auf einige der Verteilermodule 2 zu.

Exemplarisch enthält die Fluidverteileranordnung drei sich voneinander unterscheidende Arten von Verteilermodulen 2. Zur besseren Unterscheidung seien diese verschiedenen Verteilermodultypen im Folgenden als erste Verteilermodule 2a, zweite Verteilermodule 2b und dritte Verteilermodule 2c bezeichnet.

Von diesen verschiedenen Verteilermodultypen sind exemplarisch die untereinander zweckmäßigerweise identischen ersten Verteilermodule 2a und die untereinander zweckmäßigerweise ebenfalls identischen dritten Verteilermodule 2c jeweils als Ventilmodule gestaltet, die mit jeweils mindestens einem zur Steuerung von Fluidströmen dienenden und insbesondere elektrisch betätigbaren Ventil 4 ausgestattet sind. Während die ersten und dritten Verteilermodule 2a, 2c jeweils mehrfach vorhanden sind, ist zweckmäßigerweise nur ein einziges zweites Verteilermodul 2b vorhanden, das überdies kein Ventil aufweist und sich somit von sowohl den ersten Verteilermodulen 2a als auch den zweiten Verteilermodulen 2b unterscheidet. Allerdings könnte auch das zweite Verteilermodul 2b prinzipiell als Ventilmodul konzipiert sein.

Die ersten Verteilermodule 2a sind so gestaltet, dass sie untereinander in beliebiger Anzahl aneinander anreihbar und durch Schraubverbindungen miteinander verbindbar sind. Die sich hierdurch ergebende Baugruppe sei im Folgenden als erste Verteilergruppe 5 bezeichnet. In vergleichbarer Weise können auch die dritten Verteilermodule 2c in der Aufreihungsrichtung 3 aneinander angesetzt und durch Schraubverbindungen miteinander verbunden werden, wobei die hierdurch realisierbare Baugruppe im Folgenden als zweite Verteilergruppe 6 bezeichnet werden soll.

Zum gegenseitigen aneinander Ansetzen ist jedes Verteilermodul 2a an in der Aufreihungsrichtung orientierten, jedoch einander entgegengesetzten Seiten mit einerseits einer ersten Montagefläche 7 und andererseits einer zweiten Montagefläche 8 ausgestattet. Die erste Montagefläche 7 passt hierbei mit der zweiten Montagefläche 8 zusammen.

Ebenso sind die dritten Verteilermodule 2c auf der einen in der Aufreihungsrichtung 3 orientierten Seite mit einer ersten Montagefläche 12 und auf der entgegengesetzten Seite mit einer zweiten Montagefläche 13 ausgestattet. Auch hier passen die erste Montagefläche 12 und die zweite Montagefläche 13 zusammen.

Zur Bildung einer ersten Verteilergruppe 5 können mehrere erste Verteilermodule 2a derart aneinandergereiht werden, dass das jeweils eine erste Verteilermodul 2a mit seiner ersten Montagefläche 12 an der ihm zugewandten zweiten Montagefläche 13 des in der Aufreihungsrichtung 3 unmittelbar benachbarten weiteren ersten Verteilermoduls 2a anliegt. In gleicher Weise lassen sich auch die dritten Verteilermodule 2c zu der zweiten Verteilergruppe 6 zusammensetzen.

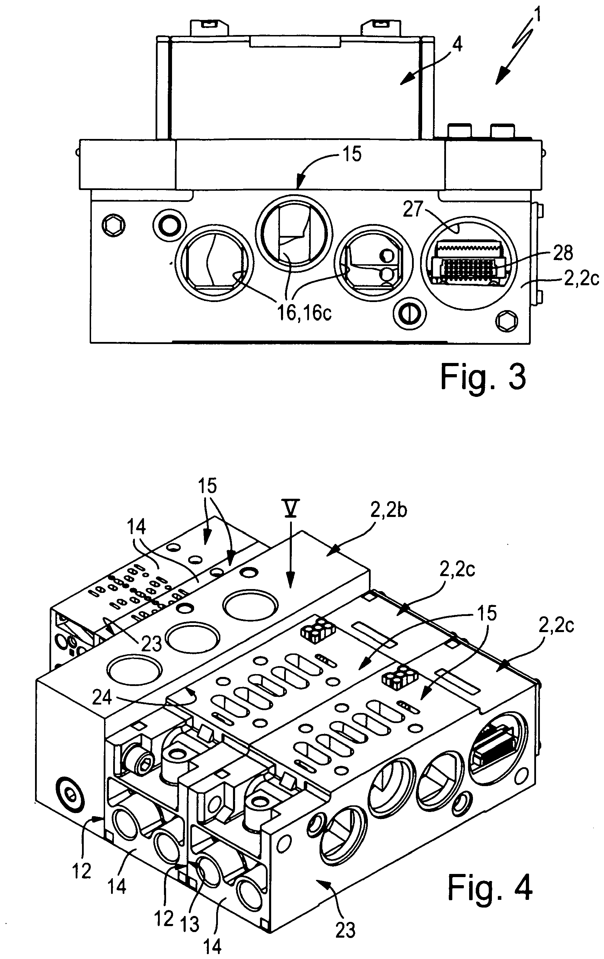

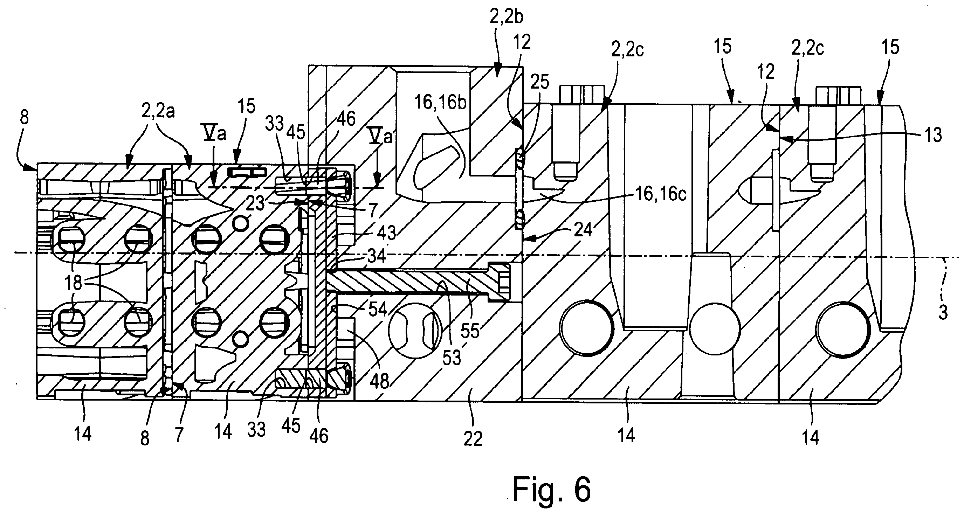

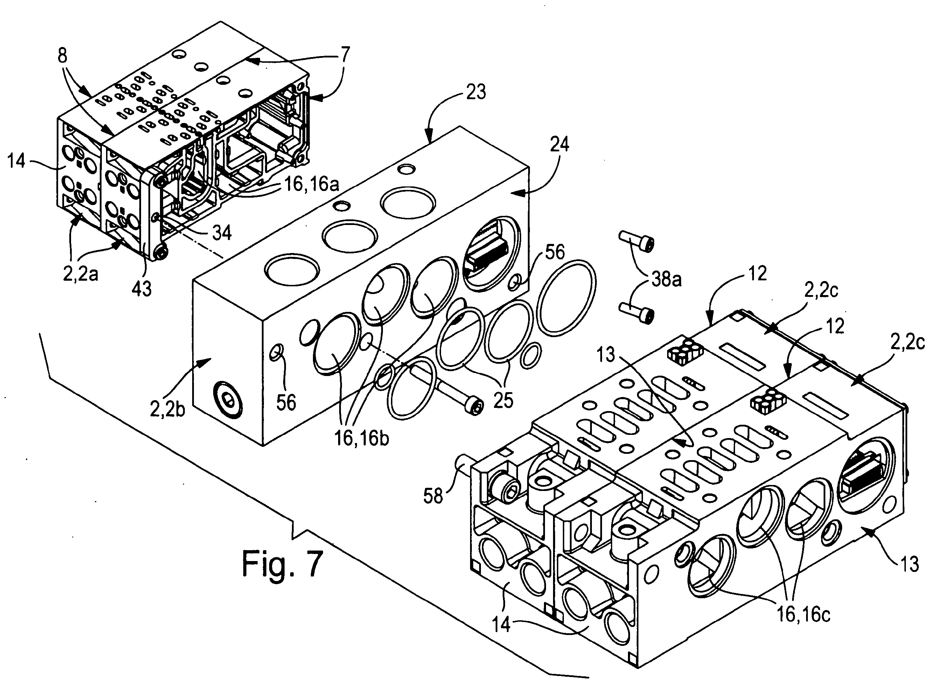

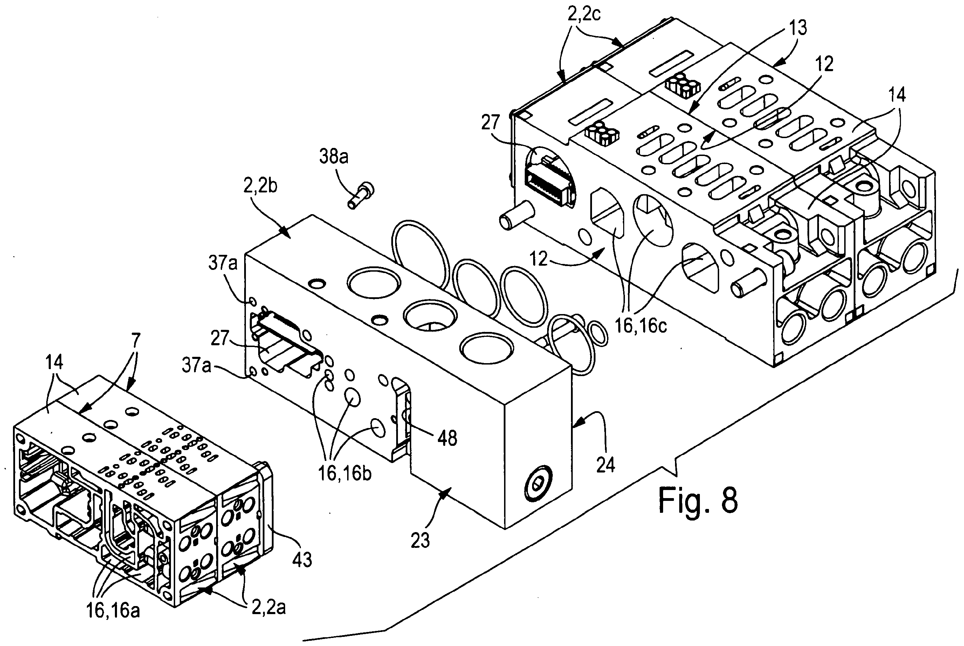

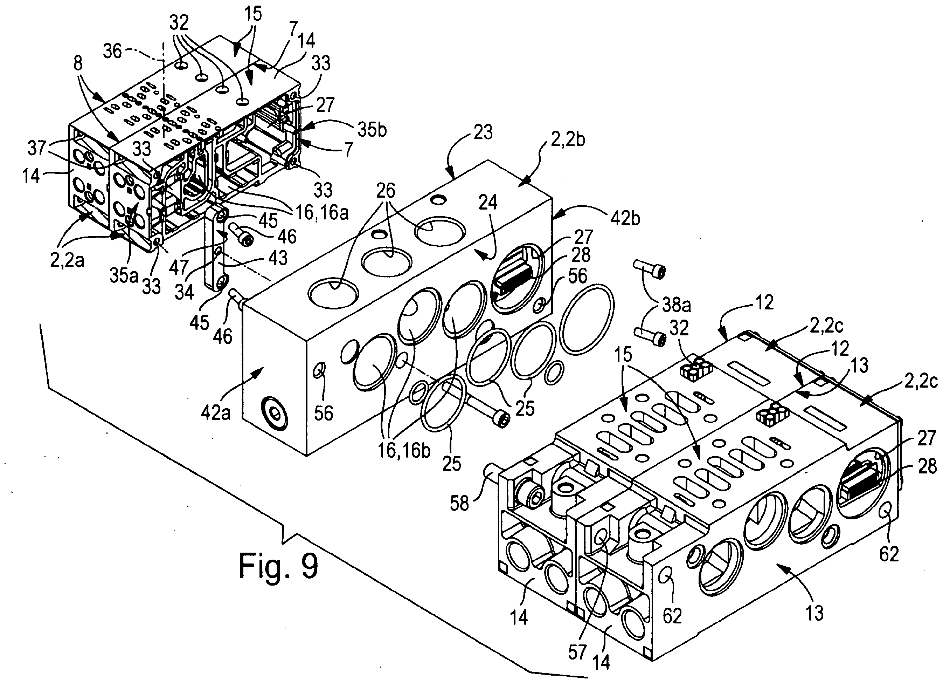

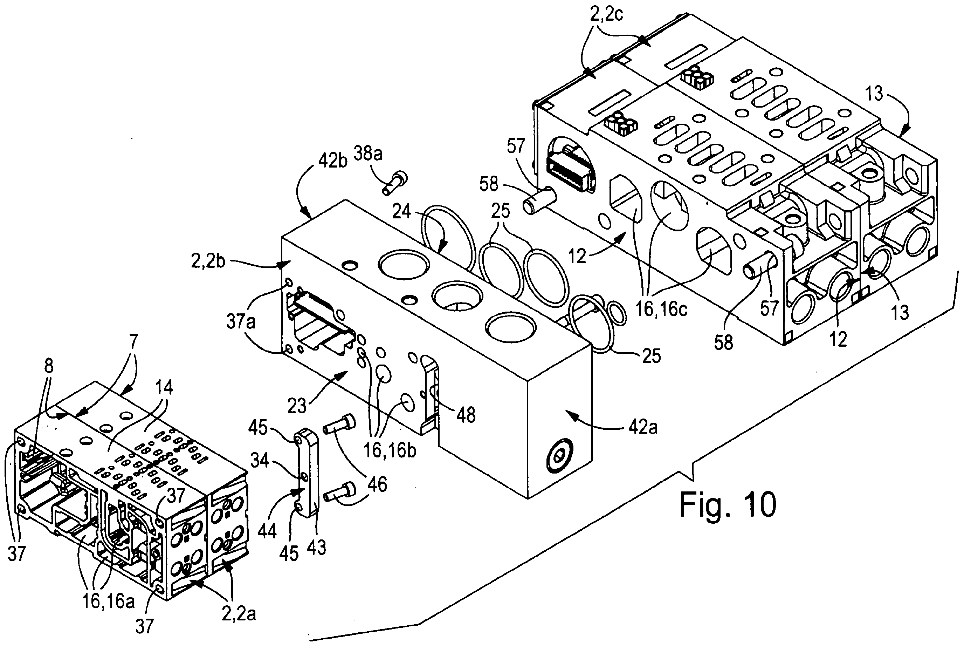

In den Figuren 4 bis 10 sind die ersten und dritten Verteilermodule 2a, 2c nur partiell abgebildet, wobei derjenige Bestandteil ersichtlich, an dem die zugehörigen Montageflächen 7, 8; 12, 13 ausgebildet sind. Wie erwähnt, sind die ersten und dritten Verteilermodule 2a, 2c als Ventilmodule konzipiert, die zweckmäßigerweise intern ebenfalls modular aufgebaut sind, wobei sie jeweils einen mit den zugeordneten ersten und zweiten Montageflächen 7, 8; 12, 13 ausgestatteten Trägerkörper 14 aufweisen, der mit mindestens einem Ventil 4 bestückt ist.

In den Figuren 4 bis 10 sind die Ventile 4 nicht abgebildet, sondern lediglich die Trägerkörper 14.

Jeder Trägerkörper 14 weist an einer im Folgenden als Oberseite bezeichneten, rechtwinkelig zu der Aufreihungsrichtung 3 orientierten Längsseite eine Bestückungsfläche 15 auf, an der bei vervollständigtem ersten bzw. zweiten Verteilermodul 2a, 2c mindestens eines der Ventile 4 in bevorzugt lösbarer Weise angebracht ist. Exemplarisch sind die Trägerkörper 14 der ersten Verteilermodule 2a mit jeweils zwei Ventilen 4 bestückbar oder bestückt, während die Trägerkörper 14 der dritten Verteilermodule 2c mit jeweils nur einem Ventil 4 bestückbar oder bestückt sind. Die Ventile der dritten Verteilermodule 2c sind allerdings größer dimensioniert als die Ventile 4 der ersten Verteilermodule 2a und sind insbesondere in der Lage, einen größeren Volumenstrom zu steuern als die Ventile 4 der ersten Verteilermodule 2a.

Jedes Verteilermodul 2 ist von mindestens einem Fluidkanal 16 durchsetzt, wobei im Folgenden die Fluidkanäle 16 des ersten Verteilermoduls 2a auch als erste Fluidkanäle 16a, diejenigen des zweiten Verteilermoduls 2b als zweite Fluidkanäle 16b und diejenigen des dritten Verteilermoduls 2c als dritte Fluidkanäle 16c bezeichnet werden.

Die Ventile 4 sind in der Lage, die Fluidströmung durch zumindest einige der das jeweils zugeordnete erste und dritte Verteilermodul 2a, 2c durchsetzenden Fluidkanäle 16a, 16c zu steuern. Hierzu enthält jedes Ventil 4 mindestens ein zwischen verschiedenen Schaltstellungen umschaltbares Ventilglied, zu dessen Betätigung jedes Ventil 4 mindestens einen elektrisch aktivierbaren Ventilantrieb 17 aufweist. Bei den Ventilantrieben 17 handelt es sich vorzugsweise um elektrisch betätigbare Vorsteuerventile.

Jeweils ein oder mehrere der ersten und dritten Fluidkanäle 16a, 16c durchsetzen das zugeordnete erste und dritte Verteilermodul 2a, 2c in der Aufreihungsrichtung 3 und münden einerseits zur ersten Montagefläche 7, 12 und andererseits zur zweiten Montagefläche 8, 13 des betreffenden Verteilermoduls 2a, 2c aus. Die Mündungen sind hierbei so platziert, dass innerhalb einer jeweiligen Verteilergruppe 5, 6 die zu den jeweiligen Montageflächen 7, 8 bzw. 12, 13 ausmündenden ersten Fluidkanäle 16a bzw. dritten Fluidkanäle 16c benachbarter erster Verteilermodule 2a und benachbarter dritter Verteilermodule 2c miteinander kommunizieren und dadurch ein oder mehrere die jeweilige Verteilergruppe 5, 6 in der Aufreihungsrichtung 3 durchziehende Fluidkanalstränge gebildet sind. Diese Fluidkanalstränge dienen zur gemeinsamen Fluidversorgung und Fluidabfuhr zu und von den Ventilen 4.

Jedes erste und dritte Verteilermodul 2a, 2c ist außerdem zweckmäßigerweise von jeweils mindestens einem Arbeitskanal 18 durchsetzt, der vom zugeordneten Ventil 4 beherrscht wird und zu einer Seitenfläche des betreffenden Verteilermoduls 2a, 2c ausmündet - vorliegend im Bereich des Trägerkörpers 14 -, wobei sich an diese Kanalmündungen Fluidleitungen anschließen lassen, die zu einem anzusteuernden Verbraucher führen, beispielsweise zu einem durch Fluidkraft betätigbaren Antrieb.

Innerhalb der Modulbaugruppe 1 sind wie erwähnt erste und dritte Verteilermodule 2a, 2c unterschiedlichen Typs zusammengefasst. Aufgrund der sich voneinander unterscheidenden Montageflächen ist es dabei nicht möglich, erste Verteilermodule 2a direkt an dritte Verteilermodule 2c anzubauen. Die Montageflächen 12, 13 der dritten Verteilermodule 2c haben einen größeren Umriss als die Montageflächen 7, 8 der ersten Verteilermodule 2a und auch die Querschnitte und die Verteilung der im Bereich der Montageflächen liegenden Kanalmündungen der ersten und dritten Fluidkanäle 16a, 16c weicht voneinander ab. Daher ist zwischen miteinander zu verbindende erste und dritte Verteilermodule 2a, 2c das als Übergangsmodul bzw. Adaptermodul fungierende zweite Verteilermodul 2b zwischengeschaltet. Dieses besteht beim Ausführungsbeispiel aus einem bevorzugt einstückigen, insbesondere blockförmig gestalteten Modulkörper 22.

Das zweite Verteilermodul 2b verfügt an einander entgegengesetzten, jeweils in der Aufreihungsrichtung 3 orientierten Seiten zum einen über eine erste Montagefläche 23 und zum anderen über eine zweite Montagefläche 24. Das zweite Verteilermodul 2b durchsetzende zweite Fluidkanäle 16b münden einenends an der ersten Montagefläche 23 und andernends an der zweiten Montagefläche 24 aus.

Die erste Montagefläche 23 des zweiten Verteilermoduls 2b ist in seiner Gestaltung an die erste Montagefläche 7 der ersten Verteilermodule 2a angepasst, so dass ein erstes Verteilermodul 2a mit seiner ersten Montagefläche 7 an die erste Montagefläche 23 des zweiten Verteilermoduls 2b in einer Weise ansetzbar ist, dass die an den einander zugewandten ersten Montageflächen 7, 23 vorhandenen Kanalmündungen der ersten und zweiten Fluidkanäle 16a, 16b miteinander fluchten.

In vergleichbarer Weise ist die zweite Montagefläche 24 des zweiten Verteilermoduls 2b an die erste Montagefläche 12 der dritten Verteilermodule 2c angepasst. Somit ergibt sich eine Fluidverbindung zwischen zweiten und dritten Fluidkanälen 16b, 16c, wenn ein drittes Verteilermodul 2c mit seiner ersten Montagefläche 12 an die zweite Montagefläche 24 des zweiten Verteilermoduls 2b angesetzt ist.

Zwischen die einander zugewandten Montageflächen 7, 23; 12, 24 sind zweckmäßigerweise Dichtungsmittel 25 zwischengefügt, die in der Zeichnung zum Teil ersichtlich sind und die einen leckagefreien Fluidübertritt zwischen aneinander angesetzten Verteilermodulen 2 ermöglichen. Solche Dichtungsmittel befinden sich auch zwischen den Verteilermodulen 2 einer jeweiligen Verteilergruppe 5, 6.

Indem das stirnseitige erste Verteilermodul 2a der ersten Verteilergruppe 5 an die erste Montagefläche 23 und das stirnseitige dritte Verteilermodul 2c der zweiten Verteilergruppe 6 an die zweite Montagefläche 24 des zweiten Verteilermoduls 2b angebaut wird, ergibt sich die aus Figuren 1 und 2 ersichtliche Modulbaugruppe 1, wobei die zweiten Fluidkanäle 16b dafür sorgen, dass sich ein oder mehrere Fluidkanalstränge ergeben, die aus miteinander fluchtenden ersten, zweiten und dritten Fluidkanälen 16a, 16b, 16c bestehen und sämtliche Verteilermodule 2 durchziehen.

Das zweite Verteilermodul 2b kann gemäß Ausführungsbeispiel auch als Versorgungsmodul genutzt werden, indem es das für den Betrieb der ersten und dritten Verteilermodule 2a, 2c benötigte Druckmedium in die genannten Fluidkanalstränge einspeist und aus diesen abführt. Es verfügt zu diesem Zweck über an mindestens einer Außenfläche angeordnete Anschlussöffnungen 26, die im Innern des Modulkörpers 22 mit den darin verlaufenden zweiten Fluidkanälen 16b in Fluidverbindung stehen.

Die elektrische Ansteuerung der Ventilantriebe 17 kann für jedes Ventil oder für Gruppen von Ventilen individuell über direkt vom jeweiligen Ventilantrieb abgehende elektrische Kabel erfolgen. Vorzugsweise erhalten die Ventilantriebe 17 ihre Betätigungssignale jedoch aus dem Innern der Verteilermodule 2. Hierzu ist jedes Verteilermodul 2 in der Aufreihungsrichtung 3 von einem Energieversorgungskanal 27 durchsetzt, der zu beiden Montageflächen des jeweiligen Verteilermoduls 2 ausmündet und in dem sich eine elektrische Verbindungsstruktur 28 befindet, die so ausgebildet und angeordnet ist, dass im aneinandergereihten Zustand der Verteilermodule 2 ein durchgehender elektrischer Verkettungsstrang entsteht, der sich aus den miteinander verbundenen elektrischen Verbindungsstrukturen 28 zusammensetzt. An den Bestückungsflächen 15 angeordnete elektrische Schnittstellenmittel 32 stehen über nicht abgebildete interne elektrische Leiter mit der jeweils zugeordneten elektrischen Verbindungsstruktur 28 in Verbindung und ermöglichen ein lösbares Kuppeln mit komplementären Schnittstellenmitteln der an die Bestückungsflächen 15 anbaubaren Ventile 4.

Wie schon erwähnt, sind Schraubverbindungsmittel vorhanden, um in der Aufreihungsrichtung 3 unmittelbar aufeinanderfolgende Verteilermodule 2 aneinander zu befestigen.

Zur Verbindung untereinander, um eine erste Verteilergruppe 5 zu erhalten, weist jedes erste Verteilermodul 2a an seiner ersten Montagefläche 7 mehrere erste Gewindelöcher 33 auf. Exemplarisch sind pro erster Montagefläche 7 vier erste Gewindelöcher 33 vorhanden, die in den Eckbereichen eines Rechteckes platziert sind.

Die Verteilung der Lochmündungen der ersten Gewindelöcher 33 ist zweckmäßigerweise so gewählt, dass je zwei erste Gewindelöcher 33 benachbart zu jeweils einer von zwei ersten bzw. zweiten Seitenflächen 35a, 35b an der ersten Montagefläche 7 ausmünden, wobei die beiden ersten Gewindelöcher 33 jedes dieser beiden Lochpaare in einer Höhenrichtung 36 des ersten Verteilermoduls 2a mit Abstand zueinander angeordnet sind.

Die ersten und zweiten Seitenflächen 35a, 35b sind rechtwinkelig zu der ersten Montagefläche 7 orientiert und weisen in einander entgegengesetzte Richtungen. Die strichpunktiert angedeutete Höhenrichtung 36 verläuft rechtwinkelig zur Aufreihungsrichtung 3 und zur Normalenrichtung der beiden Seitenflächen 35a, 35b.

An dieser Stelle sei angemerkt, dass die Aufreihungsrichtung 3 zweckmäßigerweise die Normalenrichtung sämtlicher erster und zweiter Montageflächen 7, 8, 12, 13, 23, 24 darstellt.

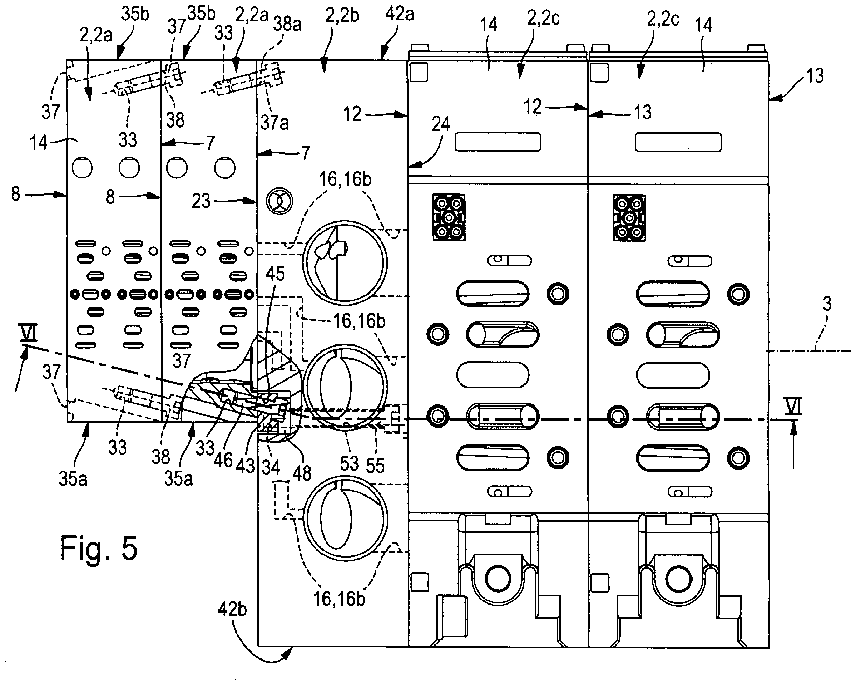

Wie insbesondere aus Figur 5 ersichtlich ist, erstrecken sich die ersten Gewindelöcher 33 in einer bezüglich der Aufreihungsrichtung 3 geneigten Ausrichtung. Ausgehend von der ersten Montagefläche 7 erstrecken sie sich schräg zu der Aufreihungsrichtung 3 in einer rechtwinkelig zur Höhenrichtung 36 verlaufenden Ebene, wobei sie sich mit zunehmender axialer Tiefe von der jeweils unmittelbar benachbarten ersten Seitenfläche 35a bzw. 35b entfernen.

Jedes erste Verteilermodul 2a weist darüber hinaus mehrere im Folgenden als Verkettungslöcher 37 bezeichnet, gewindelose Durchgangslöcher auf, die zu der zweiten Montagefläche 13 ausmünden. Deren Verteilung entspricht der Verteilung der ersten Gewindelöcher 33, so dass, wenn ein erstes Verteilermodul 2a mit seiner zweiten Montagefläche 13 an die erste Montagefläche 12 eines weiteren ersten Verteilermoduls 2a angesetzt ist, die Mündungen der Verkettungslöcher 37 mit den Mündungen der ersten Gewindelöcher 33 fluchten.

Auch die Verkettungslöcher 37 haben zweckmäßigerweise einen schrägen Verlauf, was beim Ausführungsbeispiel dazu führt, dass sie an ihrer der zweiten Montagefläche 24 entgegengesetzten Stirnseite zur jeweils benachbarten ersten bzw. zweiten Seitenfläche 35a, 35b ausmünden.

Zur Schraubverbindung zweier erster Verteilermodule 2a kann je eine als Verkettungsschraube 38 bezeichnete Schraube an der betreffenden Seitenfläche 35a, 35b mit schräger Ausrichtung in ein Verkettungsloch 37 eingeführt und in das damit fluchtende erste Gewindeloch 33 eingeschraubt werden. Indem sich der Schraubenkopf der Verkettungsschraube 38 am Rand des Verkettungsloches 37 abstützt, werden die derart miteinander verschraubten ersten Verteilermodule 2a in der Aufreihungsrichtung 3 fest miteinander verspannt.

Die Verkettungslöcher 37 der ersten Verteilermodule 2a sind auch nutzbar, um Schraubverbindungen zwischen dem stirnseitigen ersten Verteilermodul 2a der ersten Verteilergruppe 5 und dem zweiten Verteilermodul 2b herzustellen. Dabei kann mindestens eine Schraubverbindung in vergleichbarer Weise realisiert werden, wie zwischen zwei ersten Verteilermodulen 2a. Exemplarisch trifft dies auf die beiden ersten Gewindelöcher 33 zu, die der zweiten Seitenfläche 35b zugeordnet sind. Das zweite Verteilermodul 2b verfügt an seiner ersten Montagefläche 23 über Mündungen weiterer Verkettungslöcher 37a, die mit den Mündungen der im Bereich der ersten Seitenfläche 35a an der ersten Montagefläche 7 des ersten Verteilermoduls 2a ausmündenden ersten Gewindelöchern 33 fluchten, so dass durch Einschrauben weiterer Verkettungsschrauben 38a in diesen Bereich Schraubverbindungen zwischen dem ersten und zweiten Verteilermoduls 2a, 2b herstellbar sind, die den zwischen zwei ersten Verteilermodulen 2a realisierbaren Schraubverbindungen entsprechen. Möglich ist dies beim Ausführungsbeispiel deshalb, weil die weiteren Verkettungslöcher 37a in unmittelbarer Nähe einer zweiten Seitenfläche 42b des zweiten Verteilermodules 2b anbringbar ist, die zweckmäßigerweise im aneinander angesetzten Zustand des ersten und zweiten Verteilermoduls 2a, 2b in einer gemeinsamen Ebene mit der zweiten Seitenfläche 35b des ersten Verteilermoduls 2a verläuft (siehe Figur 5).

Vergleichbare Schraubverbindungen zwischen dem zweiten und ersten Verteilermodul 2b, 2a lassen sich mit den der ersten Seitenfläche 35a zugeordneten ersten Gewindelöchern 33 des ersten Verteilermoduls 2a nicht realisieren. Die Figur 2 macht deutlich, dass die der zweiten Seitenfläche 42b entgegengesetzte erste Seitenfläche 42a des zweiten Verteilermoduls 2b wegen des relativ kleinen Umrisses der ersten Verteilermodule 2a einen relativ großen Abstand zur ersten Seitenfläche 35a des benachbarten ersten Verteilermoduls 2a aufweist. Dementsprechend müsste ein geeignetes Verkettungsloch schräg durch das zweite Verteilermodul 2b hindurchgeführt werden. Wegen der internen zweiten Fluidkanäle 16b ist dies jedoch nicht ohne weiteres möglich. Daher behilft man sich in vorteilhafter Weise eines zusätzlichen Adapterelementes 43 um die Schraubverbindung in diesem Bereich zu realisieren.

Das Adapterelement 43 ist beim Ausführungsbeispiel ein länglicher, insbesondere leisten-, platten- oder stabförmig gestalteter Körper, der rückseitig eine Befestigungsfläche 44 aufweist, mit der voraus das Adapterelement 43 zur Einnahme einer Gebrauchsstellung an die erste Montagefläche 7 des am zweiten Verteilermodul 2b zu fixierenden ersten Verteilermoduls 2a ansetzbar ist.

Das Adapterelement 43 - es kann beispielsweise aus Metall oder aus Kunststoffmaterial bestehen - ist von zwei an der Befestigungsfläche 44 ausmündenden Befestigungslöchern 45 durchsetzt, deren Abstand zueinander dem Abstand der beiden benachbart zu der ersten Seitenfläche 35a an der ersten Montagefläche 7 ausmündenden ersten Gewindelöcher 33 entspricht.

In der an die erste Montagefläche 7 angesetzten Gebrauchsstellung des Adapterelementes 43 fluchten dessen Befestigungslöcher 45 mit jeweils einem der ersten Gewindelöcher 33.

Dem Adapterelement 43 sind zwei als Bestandteile der Fluidverteileranordnung ausgebildete Befestigungsschrauben 46 zugeordnet, die durch je eines der Befestigungslöcher 45 hindurchsteckbar und in das damit fluchtende erste Gewindeloch 33 des ersten Verteilermoduls 2a einschraubbar sind. Jede Befestigungsschraube 46 hat einen Schraubenkopf, der sich dabei an der der Befestigungsfläche 44 entgegengesetzten Vorderfläche 47 des Adapterelementes 43 abstützt, so dass selbiges mit dem ersten Verteilermodul 2a verspannt wird.

Das derart in der Gebrauchsstellung fixierte Adapterelement 43 steht in der Aufreihungsrichtung 3 über die erste Montagefläche 7 vor. Dies ist besonders gut in Figur 5 zu erkennen.

Das zweite Verteilermodul 2b ist an seiner ersten Montagefläche 23 mit einer Ausnehmung 48 versehen, und zwar in einem dem in Gebrauchsstellung befindlichen Adapterelement 43 gegenüberliegenden Bereich. Querschnitt und Tiefe der Ausnehmung 48 sind ausreichend bemessen, um ein vollständiges Eintauchen des Adapterelementes 43 und der das Adapterelement 43 im Bereich der Vorderfläche 47 eventuell überragenden Bestandteile der Befestigungsschrauben 46 vollständig aufnehmen zu können. Auf diese Weise ist gewährleistet, dass trotz montiertem Adapterelement 43 ein vollflächiger Kontakt zwischen den einander zugewandten ersten Montageflächen 7 und 23 des ersten und zweiten Verteilermoduls 2a, 2b möglich ist.

Entsprechend der Formgebung des Adapterelementes 43 ist die Ausnehmung 48 beim Ausführungsbeispiel nutähnlich gestaltet.

In der Gebrauchsstellung betrachtet, haben die Befestigungslöcher 45 des Adapterelementes 43 einen derartigen Schrägverlauf mit Bezug zur Aufreihungsrichtung 3, dass sie mit dem beim Ausführungsbeispiel ebenfalls schräg verlaufenden ersten Gewindelöchern koaxial fluchten.

Prinzipiell wäre es möglich, das Adapterelement mit einer vom Ausführungsbeispiel abweichenden Anzahl von Befestigungsschrauben 46 am ersten Verteilermodul 2a zu fixieren. Auch wäre es denkbar, für die Schraubverbindung andere als die ersten Gewindelöcher 33 des ersten Verteilermoduls 2a zu nutzen. Die Verwendung der ersten Gewindelöcher 33 hat jedoch den Vorteil, dass keine zusätzlichen Gewindelöcher benötigt werden und dass ein erstes Verteilermodul 2a ohne Veränderung seiner standardmäßigen Gestaltung mit einem Adapterelement 43 ausgestattet werden kann.

Um die angestrebte Schraubverbindung vollständig zu realisieren, ist das zweite Verteilermodul 2b von einem in der Aufreihungsrichtung 3 durchgehenden Verbindungsloch 53 durchsetzt. Dieses Verbindungsloch 53 ist so platziert, dass es an der zur ersten Montagefläche 23 beabstandeten Bodenfläche 54 der Ausnehmung 43 in diese Ausnehmung 48 einmündet.

Eine Verbindungsschraube 55 der Fluidverteileranordnung kann von der zweiten Montagefläche 24 her in das Verbindungsloch 53 eingeführt und durch dieses hindurchgesteckt werden, so dass es mit seinem Gewindeschaft in die Ausnehmung 48 hineinragt.

Das Adapterelement 43 verfügt in einem Bereich, der im aneinandergesetzten Zustand des ersten und zweiten Verteilermoduls 2a, 2b der in der Ausnehmung 48 liegenden Mündung des Verbindungsloches 53 gegenüberliegt, über ein Gewindeloch, das im Folgenden zur besseren Unterscheidung von den ersten Gewindelöchern 33 als zweites Gewindeloch 34 bezeichnet sei.

Um das erste Verteilermodul 2a am zweiten Verteilermodul 2b zu befestigen, wird die das Verbindungsloch 53 durchsetzende Verbindungsschraube 55 in das zweite Gewindeloch 34 eingeschraubt, wodurch das Adapterelement 43 und mithin das erste Verteilermodul 2a an die erste Montagefläche 23 des zweiten Verteilermoduls 2b herangezogen wird. Die Verbindungsschraube 55 stützt sich dabei mit einem Schraubenkopf im Bereich der zweiten Montagefläche 24 am zweiten Verteilermodul 2b ab. Der Schraubenkopf ist bezüglich der zweiten Montagefläche 24 versenkt, so dass das Zusammenwirken der zweiten Montagefläche 24 des zweiten Verteilermoduls 2b mit der ersten Montagefläche 12 des dritten Verteilermoduls 2c nicht beeinträchtigt wird.

Das Verbindungsloch 53 erstreckt sich zweckmäßigerweise parallel zu der Aufreihungsrichtung 3 und kann somit das als Adaptermodul nutzbare zweite Verteilermodul 2b geradlinig durchsetzen.

Exemplarisch wird das Adapterelement 43 mit nur einer einzigen Verbindungsschraube 55 mit dem zweiten Verteilermodul 2b verbunden. Die Anordnung ist hierbei insbesondere so getroffen, dass sich das einzige zweite Gewindeloch 34 zwischen den beiden Befestigungslöchern 45 befindet, und zwar vorzugsweise mittig. Auf diese Weise ergibt sich eine symmetrische Krafteinleitung.

Abweichend vom Ausführungsbeispiel könnte das Adapterelement 43 aber auch mit mehreren zweiten Gewindelöchern 34 versehen sein, um ein Zusammenwirken mit mehreren das zweite Verteilermodul 2b durchsetzenden Verbindungsschrauben 55 zu ermöglichen.

Da man in der Gestaltung des Adapterelementes 43 relativ frei ist, besteht die vorteilhafte Möglichkeit, das mindestens eine zweite Gewindeloch 34 so zu platzieren, dass das zugeordnete Verbindungsloch 53 das zweite Verteilermodul 2b in einem Bereich durchsetzen kann, in dem sich keine Fluidkanäle befinden.

Auch das jeweils erste dritte Verteilermodul 2c der zweiten Verteilergruppe 6 kann mittels mindestens einer Schraubverbindung an dem zweiten Verteilermodul 2b fixiert werden. Hierzu sind beim Ausführungsbeispiel in dem zweiten Verteilermodul 2b mehrere dritte Gewindelöcher 56 ausgebildet, die an der zweiten Montagefläche 24 ausmünden und die jeweils einem weiteren Verkettungsloch 57 gegenüberliegen, das das dritte Verteilermodul 2c durchsetzt und zu dessen ersten Montagefläche 12 ausmündet. Mittels je einer weiteren Verkettungsschraube 58 besteht somit die Möglichkeit, ein drittes Verteilermodul 2c, das mit seiner ersten Montagefläche 12 an die zweite Montagefläche 24 des zweiten Verteilermoduls 2b angesetzt ist, mit dem zweiten Verteilermodul 2b zu verschrauben.

Jedes dritte Verteilermodul 2c verfügt an seiner zweiten Montagefläche 13 über Gewindelöcher, die zur besseren Unterscheidung als vierte Gewindelöcher 62 bezeichnet seien und die die gleiche Verteilung wie die dritten Gewindelöcher 56 haben. Auf diese Weise können dritte Verteilermodule 2c untereinander in gleicher Weise befestigt werden wie das zuvorderst angeordnete dritte Verteilermodul 2c an dem zweiten Verteilermodul 2b.

Anstatt ein erstes Verteilermodul 2a gemäß Ausführungsbeispiel sowohl mit standardmäßig vorhandenen Schraubverbindungsmitteln 33, 37a, 38a als auch gleichzeitig unter Verwendung eines Adapterelementes 43 am zweiten Verteilermodul 2b zu fixieren, bestünde prinzipiell die Möglichkeit, ausschließlich auf Schraubverbindungen zurückzugreifen, die über ein Adapterelement 43 verfügen, wobei in diesem Fall mehrere Adapterelemente 43 zum Einsatz kommen könnten. Auf diese Weise wäre es beispielsweise problemlos möglich, die über einen kleineren Querschnitt verfügenden, ersten Verteilermodule 2a nicht seitenbündig, sondern mit beidseitigem Abstand zu den ersten und zweiten Seitenflächen 42a, 42b am zweiten Verteilermodul 2b anzubringen.

## Patentansprüche

1. Fluidverteileranordnung, mit mehreren in einer Aufreihungsrichtung aneinanderreihbaren und zur Bildung einer Modulbaugruppe (1) paarweise durch jeweils mindestens eine Schraubverbindung aneinander fixierbaren Verteilermodulen (2), die jeweils mindestens einen Fluidkanal (16) aufweisen und von denen mindestens ein erstes Verteilermodul (2a) eine in der Aufreihungsrichtung (3) orientierte erste Montagefläche (7) zur Anlage an einer zugewandten ersten Montagefläche (23) eines in der Aufreihungsrichtung (3) benachbarten zweiten Verteilermoduls (2b) aufweist, wobei zur Ausbildung mindestens einer das erste und zweite Verteilermodul (2a, 2b) aneinander fixierenden Schraubverbindung das erste Verteilermodul (2a) mindestens ein zu seiner ersten Montagefläche (7) ausmündendes Gewindeloch (33) und das zweite Verteilermodul (2b) mindestens ein in der Aufreihungsrichtung (3) durchgehendes Verbindungsloch (53) für eine Verbindungsschraube (55) aufweist, wobei zur Herstellung der mindestens einen Schraubverbindung des ersten und zweiten Verteilermoduls (2a, 2b) ein an die erste Montagefläche (7) des ersten Verteilermoduls (2a) ansetzbares und daran mittels einer in das mindestens eine Gewindeloch (33) einschraubbaren Befestigungsschraube (46) unabhängig von dem zweiten Verteilermodul (2b) fixierbares Adapterelement (43) vorhanden ist, wobei das zweite Verteilermodul (2b) an seiner ersten Montagefläche (23) eine Ausnehmung (48) aufweist, in die das Adapterelement (43) im an das zweite Verteilermodul (2b) angesetzten Zustand des ersten Verteilermoduls (2a) eintaucht, und wobei das mindestens eine Verbindungsloch (53) des zweiten Verteilermoduls (2b) derart in die Ausnehmung (48) einmündet, dass es mit einem Gewindeloch (34) des in die Ausnehmung (48) eintauchenden Adapterelementes (43) fluchtet und eine in das Verbindungsloch (53) eingesetzte Verbindungsschraube (55) in das Gewindeloch (34) des Adapterelementes (43) einschraubbar ist, **dadurch gekennzeichnet, dass** das mindestens eine, zur Fixierung des Adapterelementes (43) dienende Gewindeloch (33) des ersten Verteilermodules (2a) schräg bezüglich dessen erster Montagefläche (7) ausgerichtet ist.

2. Fluidverteileranordnung nach Anspruch 1, **dadurch gekennzeichnet, dass** das erste Verteilermodul (2a) zwei sich an einander entgegengesetzten Randbereichen seiner ersten Montagefläche (7) anschließende, rechtwinkelig zu dieser ersten Montagefläche (7) orientierte Seitenflächen (35a, 35b) aufweist, wobei die Mündung des Gewindeloches (33) benachbart zu einer dieser Seitenflächen (35a) angeordnet ist und sich das Gewindeloch (33) mit zunehmender axialer Tiefe von dieser benachbarten Seitenfläche (35a) entfernt.

3. Fluidverteileranordnung nach Anspruch 2, **dadurch gekennzeichnet, dass** zu der ersten Montagefläche (7) des ersten Verteilermoduls (2a) wenigstens zwei zur Fixierung ein und desselben Adapterelementes (43) nutzbare Gewindelöcher (33) ausmünden.

4. Fluidverteileranordnung nach Anspruch 3, **dadurch gekennzeichnet, dass** das erste Verteilermodul (2a) eine zu der Aufreihungsrichtung (3) rechtwinkelige Höhenrichtung (36) aufweist, wobei die wenigstens zwei Gewindelöcher (33) in der Höhenrichtung (36) mit Abstand zueinander angeordnet sind.

5. Fluidverteileranordnung nach einem der Ansprüche 1 bis 4, **dadurch gekennzeichnet, dass** das Adapterelement (43) von mindestens einem Befestigungsloch (45) durchsetzt ist, das im an die erste Montagefläche (7) des ersten Verteilermoduls (2a) angesetzten Zustand mit einem dort ausmündendem Gewindeloch (33) fluchtet und in das eine in das fluchtende Gewindeloch (33) einschraubbare Befestigungsschraube (46) einsteckbar ist.

6. Fluidverteileranordnung nach einem der Ansprüche 1 bis 5, **dadurch gekennzeichnet, dass** das mindestens eine Gewindeloch (34) des Adapterelementes (43) zwischen zwei das Adapterelement (43) durchsetzenden, zur Aufnahme je einer Befestigungsschraube (46) dienenden Befestigungslöchern (45) angeordnet ist, wobei das Adapterelement (43)zweckmäßigerweise genau ein mittig zwischen zwei Befestigungslöchern (45) angeordnetes Gewindeloch (34) aufweist.

7. Fluidverteileranordnung nach einem der Ansprüche 1 bis 6, **dadurch gekennzeichnet, dass** das Adapterelement (43) leisten-, stab- oder plattenförmig ausgebildet und mit einer Längsseite an die erste Montagefläche (7) des ersten Verteilermoduls (2a) ansetzbar oder angesetzt ist, wobei die Ausnehmung (48) des zweiten Verteilermoduls (2b) zweckmäßigerweise nutförmig ausgebildet ist.

8. Fluidverteileranordnung nach einem der Ansprüche 1 bis 7, **dadurch gekennzeichnet, dass** sie mehrere erste Verteilermodule (2a) aufweist, die an ihrer der ersten Montagefläche (7) entgegengesetzten Seite eine zweite Montagefläche (8) aufweisen und die mit einander zugewandten ersten und zweiten Montageflächen (7, 8) aneinander ansetzbar sind, um eine sich aus mehreren ersten Verteilermodulen (2a) zusammensetzende Verteilergruppe (5) zu bilden, wobei jedes erste Verteilermodul (2a) mindestens ein derart zu der zweiten Montagefläche (8) ausmündendes Verkettungsloch (37) aufweist, dass bei aneinandergesetzten ersten Verteilermodulen (2a) mindestens ein Verkettungsloch (37) des einen ersten Verteilermodules (2a) mit einem an der ersten Montagefläche (7) ausmündenden Gewindeloch (33) des anderen ersten Verteilermoduls (2a) fluchtet und darin eine die beiden ersten Verteilermodule (2a) miteinander verbindende Verkettungsschraube (38) einführbar ist.

9. Fluidverteileranordnung nach Anspruch 8, **dadurch gekennzeichnet, dass** das Verkettungsloch (37) einen bezüglich der Aufreihungsrichtung (3) schrägen Verlauf hat und mit seiner der zweiten Montagefläche (8) abgewandten Stirnseite zu einer bezüglich den beiden Montageflächen (7, 8) rechtwinkelig orientierten Seitenfläche (35a, 35b) des ersten Verteilermoduls (2a) ausmündet.

10. Fluidverteileranordnung nach einem der Ansprüche 1 bis 9, **dadurch gekennzeichnet, dass** das zweite Verteilermodul (2b) ein Übergangsmodul ist, das auf der seiner ersten Montagefläche (23) entgegengesetzten Seite eine einen anderen Umriss als die erste Montagefläche (23) aufweisenden Umriss besitzende zweite Montagefläche (24) aufweist, wobei die Fluidverteileranordnung mindestens ein in seiner Gestaltung von den ersten und zweiten Verteilermodulen (2a, 2b) abweichendes drittes Verteilermodul (2c) aufweist, das mittels mindestens einer Schraubverbindung an der zweiten Montagefläche (24) des zweiten Verteilermoduls (2b) fixierbar ist.

11. Fluidverteileranordnung nach Anspruch 10, **dadurch gekennzeichnet, dass** das zweite Verteilermodul (2b) von mindestens einem Fluidkanal (16b) durchsetzt ist, der einen Fluidkanal (16a) des an seiner ersten Montagefläche (23) fixierten ersten Verteilermoduls (2a) mit einem Fluidkanal (16c) des an seiner zweiten Montagefläche (24) fixierten dritten Verteilermoduls (2c) verbindet, und/oder dass die Fluidverteileranordnung mehrere unter Bildung einer Verteilergruppe (6) in der Aufreihungsrichtung (3) aneinander anbaubare, untereinander zweckmäßigerweise identisch aufgebaute dritte Verteilermodule (2c) enthält.

12. Fluidverteileranordnung nach einem der Ansprüche 1 bis 11, **dadurch gekennzeichnet, dass** jedes Verteilermodul (2) von wenigstens einem Fluidkanal (16) derart durchsetzt ist, dass sich bei zusammengesetzter Modulbaugruppe (1) mindestens ein sich durch sämtliche Verteilermodule (2) hindurch erstreckender Fluidkanalstrang ergibt.

13. Fluidverteileranordnung nach einem der Ansprüche 1 bis 12, **dadurch gekennzeichnet, dass** mindestens eines der Verteilermodule (2a, 2c) als Ventilmodul mit mindestens einem zur Fluidsteuerung dienenden Ventil (4) ausgestattet ist, wobei zweckmäßigerweise mindestens ein mit einem Ventil (4) ausgestattetes Verteilermodul (2a, 2c) einen die zugeordnete mindestens eine Montagefläche (7, 8; 12, 13) aufweisenden Trägerkörper (14) enthält, der das zugeordnete mindestens eine Ventil (4) trägt.

14. Fluidverteileranordnung nach einem der Ansprüche 1 bis 13, **dadurch gekennzeichnet, dass** sie mindestens ein aus mindestens einem ersten Verteilermodul (2a) und mindestens einem zweiten Verteilermodul (2b) sowie, zweckmäßigerweise, auch noch aus mindestens einem dritten Verteilermodul (2c) zusammengesetzte Modulbaugruppe (2) enthält.

## Claims

1. Fluid distributor assembly, comprising a plurality of distributor modules (2), which can be lined up in a line-up direction and secured to one another in pairs by at least one screw connection each to form a module assembly (1), each of which has at least one fluid passage (16), and of which at least a first distributor module (2a) has a first mounting surface (7) oriented in the line-up direction (3) for contacting a facing first mounting surface (23) of a second distributor module (2b) which is adjacent in the line-up direction (3), wherein, in order to form at least one screw connection securing the first and the second distributor module (2a, 2b) to one another, the first distributor module (2a) has at least one threaded hole (33) terminating towards its first mounting surface (7) and the second distributor module (2b) has at least one connecting hole (53) which is continuous in the line-up direction (3) for a connecting screw (55), wherein, in order to form the at least one screw connection of the first and the second distributor module (2a, 2b), an adapter element (43), which can be fitted to the first mounting surface (7) of the first distributor module (2a) and secured thereto by means of a fastening screw (46), which can be screwed into the at least one threaded hole (33), independently of the second distributor module (2b), is provided, wherein the second distributor module (2b) has at its first mounting surface (23) a recess (48), into which the adapter element (43) dips if the first distributor module (2a) is fitted to the second distributor module (2b), and wherein the at least one connecting hole (53) of the second distributor module (2b) terminates into the recess (48) in such a way that it is in alignment with a threaded hole (34) of the adapter element (43) dipping into the recess (48) and a connecting screw (55) inserted into the connecting hole (53) can be screwed into the threaded hole (34) of the adapter element (43), **characterised in that** the at least one threaded hole (33) of the first distributor module (2a), which is used for securing the adapter element (43), is inclined relative to the first mounting surface (7) of the first distributor module.

2. Fluid distributor assembly according to claim 1, **characterised in that** the first distributor module (2a) has two side faces (35a, 35b) adjoining opposite end regions of its first mounting surface (7) and oriented perpendicular to this first mounting surface (7), wherein the orifice of the threaded hole (33) is located adjacent to one of these side faces (35a) and the threaded hole (33) diverges from this adjacent side face (35a) as the axial depth increases.

3. Fluid distributor assembly according to claim 2, **characterised in that** at least two threaded holes (33) usable for securing one and the same adapter element (43) terminate towards the first mounting surface (7) of the first distributor module (2a).

4. Fluid distributor assembly according to claim 3, **characterised in that** the first distributor module (2a) has a vertical direction (36) perpendicular to the line-up direction (3), wherein the at least two threaded holes (33) are arranged at a distance from one another in the vertical direction (36).

5. Fluid distributor assembly according to any of claims 1 to 4, **characterised in that** at least one mounting hole (45), which, if the adapter element (43) is fitted to the first mounting surface (7) of the first distributor module (2a), is in alignment with a threaded hole (33) terminating there and into which a fastening screw (46) which can be screwed into the aligned threaded hole (33) can be inserted, extends through the adapter element (43).

6. Fluid distributor assembly according to any of claims 1 to 5, **characterised in that** the at least one threaded hole (34) of the adapter element (43) is located between two mounting holes (45) extending through the adapter element (43) and used to accommodate one fastening screw (46) each, wherein the adapter element (43) expediently has precisely one threaded hole (34) located in the middle between two mounting holes (45).

7. Fluid distributor assembly according to any of claims 1 to 6, **characterised in that** the adapter element (43) is rail-, bar- or plate-shaped and can be or is fitted to the first mounting surface (7) of the first distributor module (2a) by a long side, wherein the recess (48) of the second distributor module (2b) is expediently groove-shaped.

8. Fluid distributor assembly according to any of claims 1 to 7, **characterised in that** it comprises a plurality of first distributor modules (2a), which have a second mounting surface (8) on the side opposite the first mounting surface (7) and which can be fitted to one another using their first and second mounting surfaces (7, 8) in order to form a distributor group (5) composed of several first distributor modules (2a), wherein each first distributor module (2a) has at least one interconnecting hole (37) terminating towards the second mounting surface (8) in such a way that, if first distributor modules (2a) are fitted to one another, at least one interconnecting hole (37) of the one first distributor module (2a) is in alignment with a threaded hole (33) of the other first distributor module (2a) terminating at the first mounting surface (7), and that an interconnecting screw (38) connecting the two first distributor modules (2a) can be inserted thereinto.

9. Fluid distributor assembly according to claim 8, **characterised in that** the interconnecting hole (37) is sloping relative to the line-up direction (3) and terminates with its end face which is remote from the second mounting surface (8) towards a side face (35a, 35b) of the first distributor module (2a) which is oriented perpendicular to the two mounting surfaces (7, 8).

10. Fluid distributor assembly according to any of claims 1 to 9, **characterised in that** the second distributor module (2b) is a transitional module which has on the side opposite its first mounting surface (23) a second mounting surface (24) having a contour which differs from that of the first mounting surface (23), wherein the fluid distributor assembly comprises at least one third distributor module (2c), which differs from the first and second distributor modules (2a, 2b) in its design and can be secured to the second mounting surface (24) of the second distributor module (2b) by means of at least one screw connection.

11. Fluid distributor assembly according to claim 10, **characterised in that** at least one fluid passage (16b), which connects a fluid passage (16a) of the first distributor module (2a) secured to its first mounting surface (23) to a fluid passage (16c) of the third distributor module (2c) secured to its second mounting surface (24), extends through the second distributor module (2b), and/or **in that** the fluid distributor assembly comprises a plurality of third distributor modules (2c), which can be fitted to one another in the line-up direction (3) while forming a distributor group (6) and are expediently identical to one another in structure.

12. Fluid distributor assembly according to any of claims 1 to 11, **characterised in that** at least one fluid passage (16) extends through each distributor module (2) in such a way that, if the module assembly (1) is assembled, there is at least one fluid passage tract extending through all distributor modules (2).

13. Fluid distributor assembly according to any of claims 1 to 12, **characterised in that** at least one of the distributor modules (2a, 2b) is as a valve module provided with at least one valve (4) for fluid control, wherein expediently at least one distributor module (2a, 2b) provided with a valve (4) comprises a support body (14), which has the associated at least one mounting surface (7, 8; 12, 13) and supports the associated at least one valve (4).

14. Fluid distributor assembly according to any of claims 1 to 13, **characterised in that** it comprises at least one module assembly (2) composed of at least one first distributor module (2a) and at least one second distributor module (2b) and expediently at least one third distributor module (2c) as well.

## Revendications

1. Dispositif de distribution de fluides, avec plusieurs modules de distribution (2) juxtaposables dans une direction d'alignement et fixables l'un à l'autre par paire par respectivement au moins un raccord vissé pour la formation d'un ensemble modulaire (1), qui présentent respectivement au moins un canal de fluide (16) et dont au moins un premier module de distribution (2a) présente une première surface de montage (7) orientée dans la direction d'alignement (3) pour l'appui contre une première surface de montage (23) faisant face d'un deuxième module de distribution (2b) adjacent dans la direction d'alignement (3), dans lequel pour la formation d'au moins un raccord vissé fixant l'un à l'autre le premier et deuxième module de distribution (2a, 2b), le premier module de distribution (2a) présente au moins un trou taraudé (33) débouchant sur sa première surface de montage (7) et le deuxième module de distribution (2b) présente au moins un trou de liaison (53) traversant dans la direction d'alignement (3) pour une vis de liaison (55), dans lequel un adaptateur (43) applicable sur la première surface de montage (7) du premier module de distribution (2a) et fixable à celle-ci au moyen d'une vis de fixation (46) vissable dans l'au moins un trou taraudé (33) indépendamment du deuxième module de distribution (2b) est présent pour l'établissement de l'au moins un raccord vissé du premier et deuxième module de distribution (2a, 2b), dans lequel le deuxième module de distribution (2b) présente au niveau de sa première surface de montage (23) un évidement (48), dans lequel l'adaptateur (43) plonge à l'état appliqué sur le deuxième module de distribution (2b) du premier module de distribution (2a), et dans lequel l'au moins un trou de liaison (53) du deuxième module de distribution (2b) débouche dans l'évidement (48) de telle manière qu'il s'aligne avec un trou taraudé (34) de l'adaptateur (43) plongeant dans l'évidement (48) et une vis de liaison (55) insérée dans le trou de liaison (53) est vissable dans le trou taraudé (34) de l'adaptateur (43), **caractérisé en ce que** l'au moins un trou taraudé (33) du premier module de distribution (2a) servant à la fixation de l'adaptateur (43) est orienté obliquement par rapport à la première surface de montage (7) du premier module de distribution.

2. Dispositif de distribution de fluides selon la revendication 1, **caractérisé en ce que** le premier module de distribution (2a) présente deux surfaces latérales (35a, 35b) se raccordant au niveau de zones de bord opposées l'une à l'autre de sa première surface de montage (7) et orientées perpendiculairement à cette première surface de montage (7), dans lequel l'embouchure du trou taraudé (33) est agencée de manière adjacente à une de ces surfaces latérales (35a) et le trou taraudé (33) s'éloigne avec une profondeur axiale croissante de cette surface latérale adjacente (35a).

3. Dispositif de distribution de fluides selon la revendication 2, **caractérisé en ce qu'**au moins deux trous taraudés (33) utilisables pour la fixation d'un seul et même adaptateur (43) débouchent sur la première surface de montage (7) du premier module de distribution (2a).

4. Dispositif de distribution de fluides selon la revendication 3, **caractérisé en ce que** le premier module de distribution (2a) présente une direction en hauteur (36) perpendiculaire à la direction d'alignement (3), dans lequel les au moins deux trous taraudés (33) sont agencés à distance l'un de l'autre dans la direction en hauteur (36).

5. Dispositif de distribution de fluides selon l'une quelconque des revendications 1 à 4, **caractérisé en ce que** l'adaptateur (43) est traversé par au moins un trou de fixation (45), qui s'aligne à l'état appliqué sur la première surface de montage (7) du premier module de distribution (2a) avec un trou taraudé (33) y débouchant et est enfichable dans une vis de fixation (46) vissable dans le trou taraudé (33) aligné.

6. Dispositif de distribution de fluides selon l'une quelconque des revendications 1 à 5, **caractérisé en ce que** l'au moins un trou taraudé (34) de l'adaptateur (43) est agencé entre deux trous de fixation (45) traversant l'adaptateur (43), servant au logement de respectivement une vis de fixation (46), dans lequel l'adaptateur (43) présente de manière appropriée exactement un trou taraudé (34) agencé au milieu entre deux trous de fixation (45).

7. Dispositif de distribution de fluides selon l'une quelconque des revendications 1 à 6, **caractérisé en ce que** l'adaptateur (43) est réalisé en forme de baguette, de barre ou de plaque et est appliqué ou applicable avec un côté long sur la première surface de montage (7) du premier module de distribution (2a), dans lequel l'évidement (48) du deuxième module de distribution (2b) est réalisé de manière appropriée en forme de rainure.

8. Dispositif de distribution de fluides selon l'une quelconque des revendications 1 à 7, **caractérisé en ce qu'**il présente plusieurs premiers modules de distribution (2a), qui présentent au niveau de leur côté opposé à la première surface de montage (7) une deuxième surface de montage (8) et qui sont applicables l'un sur l'autre avec des première et deuxième surfaces de montage (7, 8) se faisant face l'une vers l'autre, pour former un groupe de distribution (5) se composant de plusieurs premiers modules de distribution (2a), dans lequel chaque premier module de distribution (2a) présente au moins un trou d'enchaînement (37) débouchant sur la deuxième surface de montage (8) de telle manière que dans le cas de premiers modules de distribution (2a) placés l'un contre l'autre au moins un trou d'enchaînement (37) de l'un premier module de distribution (2a) s'aligne avec un trou taraudé (33) débouchant sur la première surface de montage (7) de l'autre premier module de distribution (2a) et une vis d'enchaînement (38) reliant l'un à l'autre les deux premiers modules de distribution (2a) peut y être introduite.

9. Dispositif de distribution de fluides selon la revendication 8, **caractérisé en ce que** le trou d'enchaînement (37) a une allure oblique par rapport à la direction d'alignement (3) et débouche avec son côté frontal opposé à la deuxième surface de montage (8) sur une surface latérale (35a, 35b) orientée perpendiculairement par rapport aux deux surfaces de montage (7, 8) du premier module de distribution (2a).

10. Dispositif de distribution de fluides selon l'une quelconque des revendications 1 à 9, **caractérisé en ce que** le deuxième module de distribution (2b) est un module de transition, qui présente sur le côté opposé à sa première surface de montage (23) une deuxième surface de montage (24) disposant d'un autre contour que le contour présentant la première surface de montage (23), dans lequel le dispositif de distribution de fluides présente au moins un troisième module de distribution (2c) divergeant dans sa conception des premier et deuxième modules de distribution (2a, 2b), qui est fixable au moyen d'au moins un raccord vissé au niveau de la deuxième surface de montage (24) du deuxième module de distribution (2b).

11. Dispositif de distribution de fluides selon la revendication 10, **caractérisé en ce que** le deuxième module de distribution (2b) est traversé par au moins un canal de fluide (16b), qui relie un canal de fluide (16a) du premier module de distribution (2a) fixé au niveau de sa première surface de montage (23) à un canal de fluide (16c) du troisième module de distribution (2c) fixé au niveau de sa deuxième surface de montage (24), et/ou **en ce que** le dispositif de distribution de fluides contient plusieurs troisièmes modules de distribution (2c) construits de manière appropriée de façon identique entre eux, rapportables l'un à l'autre en formant un groupe de distribution (6) dans la direction d'alignement (3).

12. Dispositif de distribution de fluides selon l'une quelconque des revendications 1 à 11, **caractérisé en ce que** chaque module de distribution (2) est traversé par au moins un canal de fluide (16) de telle manière qu'il résulte au moins un tronçon de canal de fluide s'étendant à travers tous les modules de distribution (2) dans le cas d'un ensemble modulaire (1) composé.

13. Dispositif de distribution de fluides selon l'une quelconque des revendications 1 à 12, **caractérisé en ce qu'**au moins un des modules de distribution (2a, 2c) est équipé en tant que module de soupape d'au moins une soupape (4) servant à la commande de fluide, dans lequel de manière appropriée au moins un module de distribution (2a, 2c) équipé d'une soupape (4) contient un corps support (14) présentant l'au moins une surface de montage (7, 8; 12, 13) attribuée et qui porte l'au moins une soupape (4) attribuée.

14. Dispositif de distribution de fluides selon l'une quelconque des revendications 1 à 13, **caractérisé en ce qu'**il contient au moins un ensemble modulaire (2) composé d'au moins un premier module de distribution (2a) et d'au moins un deuxième module de distribution (2b), ainsi que, de manière appropriée, également d'au moins un troisième module de distribution (2c).
